# EUROPEAN PATENT SPECIFICATION

(11) **EP 1 428 241 B1**
(45) Date of publication and mention of the grant of the patent: **23.04.2008**
(21) Application number: 02735841.5
(22) Date of filing: 13.06.2002
(51) Int. Cl.: H01J 61/44, H01J 61/12, C09K 11/80

(54) **LOW-PRESSURE GAS DISCHARGE LAMP WITH A MERCURY-FREE GAS FILLING**
NIEDERDRUCKGASENTLADUNGSLAMPE MIT QUECKSILBERFREIER GASFÜLLUNG
LAMPE A DECHARGE DE GAZ A BASSE PRESSION CONTENANT UNE ATMOSPHERE GAZEUSE SANS MERCURE

(30) Priority: 19.06.2001 DE 10129464
(43) Date of publication of application: 16.06.2004
(73) Proprietor: Koninklijke Philips Electronics N.V., 5621 BA Eindhoven (NL); Philips Intellectual Property & Standards GmbH, 20099 Hamburg (DE)
(72) Inventor: SCHOLL, R. P. Internationaal Octrooibureau B.V., NL-5656 AA Eindhoven (NL); HILBIG, Rainer Internationaal Octrooibureau B.V., NL-5656 AA Eindhoven (NL); KOERBER, Achim Internationaal Octrooibureau B.V., NL-5656 AA Eindhoven (NL); BAIER, Johannes Internationaal Octrooibureau B.V., NL-5656 AA Eindhoven (NL); JUESTEL, Thomas Internationaal Octrooibureau B.V., NL-5656 AA Eindhoven (NL); RONDA, C. R. Internationaal Octrooibureau B.V., NL-5656 AA Eindhoven (NL)
(74) Representative: Zöllner, Christine
(86) International application number: PCT/IB2002/002244
(87) International publication number: WO 2002/103748

(56) References cited:
- EP-A- 1 187 174
- GB-A- 2 014 358
- GB-A- 2 115 977
- US-A- 3 379 916
- US-B1- 6 362 565

## Description

The invention relates to a low-pressure gas discharge lamp comprising a gas discharge vessel with a mercury-free gas filling, and comprising electrodes and means for generating and maintaining a low-pressure gas discharge.

Light generation in low-pressure gas discharge lamps is based on the principle that charge carriers, particularly electrons but also ions, are accelerated so strongly by an electric field between the electrodes of the lamp that collisions with the gas atoms or molecules in the gas filling of the lamp cause these gas atoms or molecules to be excited or ionized. When the atoms or molecules of the gas filling return to the ground state, a more or less substantial part of the excitation energy is converted to radiation.

Conventional low-pressure gas discharge lamps comprise mercury in the gas filling. The mercury in the gas filling is being regarded more and more as an environmentally harmful and toxic substance that should be avoided as much as possible in present-day mass products as its use, production and disposal pose a threat to the environment.

A further drawback of mercury low-pressure gas discharge lamps resides in that mercury vapor primarily emits radiation in the short-wave, high-energy, yet invisible UV-C range of the electromagnetic spectrum, which radiation must first be converted by the phosphors to visible radiation with a much lower energy level. In this process, the energy difference is converted to undesirable thermal radiation.

It is known already that the spectrum of low-pressure gas discharge lamps can be influenced by substituting the mercury in the gas filling with other substances.

For example, GB 2 014 358 A discloses a low-pressure gas discharge lamp comprising a discharge vessel, electrodes and a filling which contains at least one copper halogenide as the UV emitter. This copper halogenide-containing low-pressure gas discharge lamp emits in the visible range as well as in the UV range around 324.75 and 327.4 nm.

It is an object of the invention to provide a mercury-free low-pressure gas discharge lamp for general illumination purposes.

In accordance with the invention, this object is achieved by a low-pressure gas discharge lamp comprising a gas discharge vessel containing a gas filling with an indium compound and a buffer gas, and comprising a phosphor layer containing at least one phosphor emitting in the visible range of the spectrum, and comprising electrodes and means for generating and maintaining a low-pressure gas discharge.

In the lamp in accordance with the invention, a molecular gas discharge takes place at a low pressure, which gas discharge emits radiation in the visible and near UVA range of the electromagnetic spectrum. Apart from the characteristic lines of indium around 410 and 451 nm, said radiation also includes a wide continuous spectrum in the range from 320 to 450 nm. As this radiation originates from a molecular discharge, the type of indium compound, possible further additives as well as the internal lamp pressure and the operating temperature enable the exact position of the continuous spectrum to be controlled.

In combination with a phosphor layer, the lamp in accordance with the invention has a visual efficiency that is substantially higher than that of conventional low-pressure mercury discharge lamps. The visual efficiency, expressed in lumen/Watt is the ratio between the brightness of the radiation in a specific visible wavelength range and the energy for generating the radiation. The high visual efficiency of the lamp in accordance with the invention means that a specific quantity of light is obtained at a smaller power consumption.

Besides, the use of mercury is avoided.

For general illumination purposes, the lamp is combined with a phosphor layer. As the losses caused by Stokes' displacement are small, visible light having a high luminous efficiency above 100 lumen/Watt is obtained.

Particularly advantageous effects in relation to the state of the art are provided by the invention if the emission from the phosphors in the phosphor layer together with the emission from the gas discharge forms white light.

Within the scope of the invention it may be preferred that the phosphor layer contains an orange-yellow phosphor that emits in the range from 560 nm to 590 nm.

Particularly preferred is a phosphor layer that contains an orange-yellow phosphor selected from the group formed by Y₃Al₅O₁₂:Ce and (Y₁₋ₓGdₓ)₃(Al_{1-y}Gay)₅O₁₂:Ce, where 0<x<1 and 0<y<1.

It may also be preferred that the phosphor layer contains a red phosphor with an emission band in the spectral range from 510 to 560 nm and a green phosphor with an emission band in the spectral range from 590 to 630 nm, in particular that the phosphor layer contains a red phosphor selected from the group formed by Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu and Y₂O₂S:Eu, and a green phosphor selected from the group formed by (Ba,Sr)MgAl₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb and LaOBr:Ce,Tb.

In accordance with a further embodiment of the invention, the phosphor layer contains a red phosphor with an emission band in the spectral range from 510 to 560 nm, a green phosphor with the emission band in the spectral range from 590 to 630 nm and a blue phosphor with an emission band in the spectral range from 420 to 460 nm, in particular a red phosphor selected from the group formed by Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu and Y₂O₂S:Eu, and a green phosphor selected from the group formed by (Ba,Sr)Mg,Al₁₀O₁₇:EuMn; ZnS:Cu,AI,Au; SrGa₂S₄Eu; (Sr,Ba,Ca)(Ga,Al)₂S₄:Eu; (Y,Gd)BO₃:Ce,Tb; (Y,Gd)₂O₂S:Tb; and LaOBr:Ce,Tb, and a blue phosphor selected from the group formed by (Ba,Sr)Mg,Al₁₀O₁₇:Eu; (Ba,Sr)₅(PO₄)₃(F,Cl):Eu; Y₂SiO₅:Ce; ZnS:Ag and La_{0.7}Gd_{0.3}OBr:Ce.

In accordance with a further embodiment of the invention, the gas discharge vessel is surrounded by an outer bulb, and the outer surface of the gas discharge vessel is coated with a phosphor layer. The radiation in the UV range from 300 nm to 450 nm generated by the indium-containing gas filling, which radiation is emitted by the low-pressure gas discharge lamp in accordance with the invention, is not absorbed by the customary glass types, but goes through the walls of the discharge vessel substantially free of losses. Therefore, the phosphor coating can be provided on the outside of the gas discharge vessel. This results in a simplification of the manufacturing process.

A further improved efficiency is achieved if the gas discharge vessel is surrounded by an outer bulb, and the outer bulb is coated with the phosphor layer. In this case, the outer bulb also serves as a heat reflector.

These and other aspects of the invention are apparent from and will be elucidated with reference to the embodiment(s) described hereinafter.

### In the drawings:

Fig. 1 diagrammatically shows the generation of light in a low-pressure gas discharge lamp comprising a gas filling that contains an indium(I) compound, and a phosphor layer on the gas discharge vessel.

Fig. 2 is a diagrammatic cross-sectional view of a low-pressure gas discharge lamp in accordance with the invention comprising a gas discharge vessel and an outer bulb.

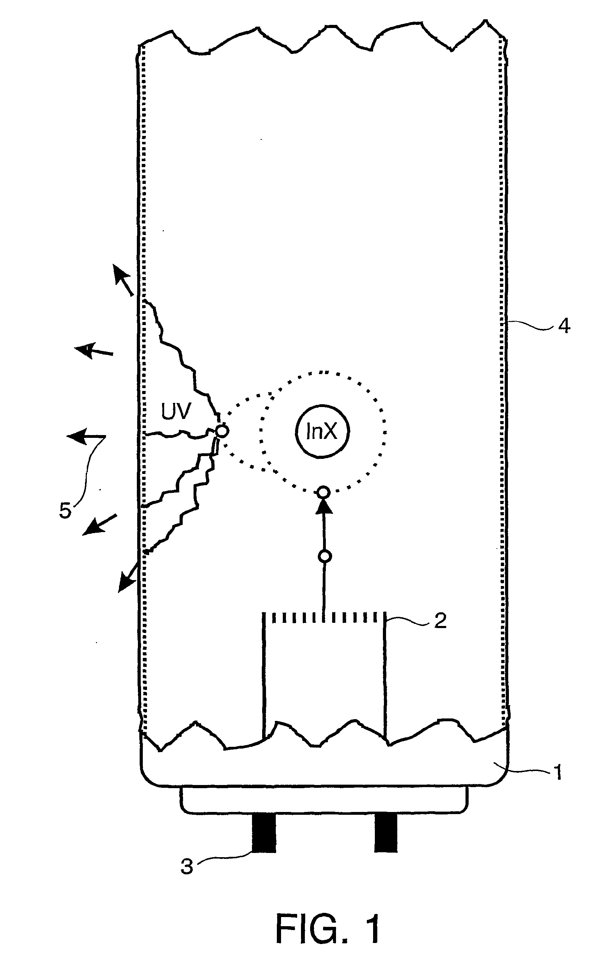

In the embodiment shown in Fig. 1, the low-pressure gas discharge lamp in accordance with the invention is composed of a tubular gas discharge vessel 1, which surrounds a discharge space. At both ends of the tube, inner electrodes 2 are sealed in, via which electrodes the gas discharge can be ignited. The low-pressure gas discharge lamp comprises a lamp holder and a lamp cap 3. An electrical ballast is integrated in known manner in the lamp holder or in the lamp cap, which ballast is used to control the ignition and the operation of the gas discharge lamp. In a further embodiment, not shown in Fig. 1, the low-pressure gas discharge lamp can alternatively be operated and controlled via an external ballast.

The gas discharge vessel may alternatively be embodied so as to be a multiple-bent or coiled tube surrounded by an outer bulb.

The wall of the gas discharge vessel is preferably made of a glass type that is transparent to UV radiation having a wavelength between 300 nm and 450 nm.

For the gas filling use is made, in the simplest case, of an indium halogenide in a quantity of 1 to 10 µg/cm³ and an inert gas. The inert gas serves as a buffer gas enabling the gas discharge to be more readily ignited. For the buffer gas use is preferably made of argon. Argon may be substituted, either completely or partly, with another inert gas, such as helium, neon, krypton or xenon.

The lumen efficiency can be dramatically improved by adding an additive selected among the group consisting of the halogenides of thallium, copper and alkaline metals to the gas filling. The efficiency can also be improved by combining two or more indium halogenides in the gas atmosphere.

The efficiency can be further improved by optimizing the internal pressure of the lamp during operation. The cold filling pressure of the buffer gas is maximally 10 mbar. Preferably, said pressure lies in the range between 1.0 to 2.5 mbar.

It has been found that, in accordance with a further advantageous measure, an increase of the lumen efficiency of the low-pressure gas discharge lamp can be achieved by controlling the operating temperature of the lamp by means of suitable constructional measures. The diameter and the length of the lamp are chosen to be such that, during operation at an outside temperature of 25 °C, an inside temperature in the range from 170 to 285 °C is attained. This inside temperature relates to the coldest spot of the gas discharge vessel as the discharge brings about a temperature gradient in the vessel.

To increase the inside temperature, the gas discharge vessel may also be coated with an infrared radiation-reflecting layer. Preferably, use is made of an infrared radiation-reflecting coating of indium-doped tin oxide.

In this case it was found that, in a low-pressure gas discharge lamp with a gas filling containing indium chloride, the temperature of the coldest spot during operation should lie in the range from 170 to 210 °C, with a temperature of 200°C being preferred. Analogously, in the case of a gas filling containing indium bromide, the temperature of the coldest spot should lie in the range from approximately 210 to 250 °C, with a temperature of approximately 225 °C being preferred. In the case of a gas filling containing indium iodide, the temperature of the coldest spot should lie in the range from approximately 220 to 285 °C, with a temperature of approximately 255 °C being preferred.

A combination of the three measures mentioned hereinabove also proved to be advantageous.

A suitable material for the electrodes in the low-pressure gas discharge lamp in accordance with the invention comprises, for example, nickel, a nickel alloy or a metal having a high melting point, in particular tungsten and tungsten alloys. Also composite materials of tungsten with thorium oxide or indium oxide can suitably be used.

In the embodiment in accordance with Fig. 1, the inside surface of the gas discharge vessel of the lamp is coated with a phosphor layer 4. The radiation emitted by the low-pressure gas discharge lamp has emission bands around 304, 325, 410 and 451 nm, as well as a continuous molecular spectrum in the visible blue range. This radiation excites the phosphors in the phosphor layer so as to emit light in the visible range 5.

The chemical composition of the phosphors in the phosphor layer and the chemical composition of the gas filling jointly determine the spectrum of the light emitted or its tone. The materials that can suitably be used as phosphors must absorb the radiation generated and emit said radiation in a suitable wavelength range, for example for the three primary colors red, blue and green, and enable a high fluorescent quantum yield to be achieved. The low-pressure gas discharge lamp's emission in the UV and blue regions of the spectrum is supplemented so as to obtain white light by using three concepts in accordance with the invention for the phosphors in the phosphor layer:
1. The emission band of the gas discharge at approximately 451 nm is used as the blue contribution to the total radiation and the emission band of the gas discharge at approximately 304, 325 and 410 nm as well as the continuous molecular spectrum are converted by a suitable phosphor to light of the complementary color to blue, for example yellow-orange. The combination of blue and yellow-orange gives white.
   Suitable phosphors for the first concept are phosphors that emit in a broad band in the yellow-orange range of the spectrum, for example the group of the granates Y₃Al₅O₁₂:Ce and (Y₁₋ₓGdₓ)₃(Al_{1-y}Ga_{y})₅O₁₂:Ce, where 0<x<1 and 0<y<1.
2. Use is made of the emission band of the gas discharge at approximately 451 nm as the blue contribution to the total radiation and the emission band of the gas discharge at approximately 304, 325 and 410 nm as well as the continuous molecular spectrum are converted by a suitable phosphor to light of the two complementary colors to blue, i.e. red and green. The combination of blue, red and green gives white.
   Red-emitting phosphors emitting in the spectral range from 590 to 630 nm and green-emitting phosphors emitting in the spectral range from 510 to 560 nm are necessary. Suitable red phosphors are selected from the group formed by Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu and Y₂O₂S:Eu, and suitable green phosphors are selected from the group formed by (Ba,Sr)MgAl₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb and LaOBr:Ce,Tb.
3. Use is made of the emission band of the gas discharge at approximately 451 nm as the blue contribution to the total radiation, and the emission band of the gas discharge at approximately 304, 325 and 410 nm as well as the continuous molecular spectrum are converted by a suitable phosphor to light with the three components of white, i.e. red, green and blue. The additional blue constituent of the primary radiation from the gas discharge results in a white color having a higher color temperature.

Suitable phosphor combinations for the third concept comprise a red phosphor selected from the group formed by Sr₂CeO₄:Eu, Y₂O₃:EU,Bi; (Y,Gd)₂O₃:Eu,Bi; Y(V,P)O₄:Eu; Y(V,P)O₄:Eu,Bi; SrS:Eu and Y₂O₂S:Eu, and a green phosphor selected from the group formed by (Ba,Sr)Mg,Al₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb and LaOBr:Ce,Tb and a blue phosphor selected from the group formed by (Ba,Sr)Mg,Al₁₀O₁₇:Eu; (Ba,Sr)₅(PO₄)₃(F,Cl):Eu; Y₂SiO₅:Ce; ZnS:Ag and La_{0.7}Gd_{0.3}OBr:Ce.

In accordance with a different embodiment of the invention, the phosphors or phosphor combinations are not provided on the inside of the gas discharge vessel but on the outside thereof as the radiation in the UV range from 300 nm to 450 nm generated by the indium-containing gas filling is not absorbed by the customary glass types.

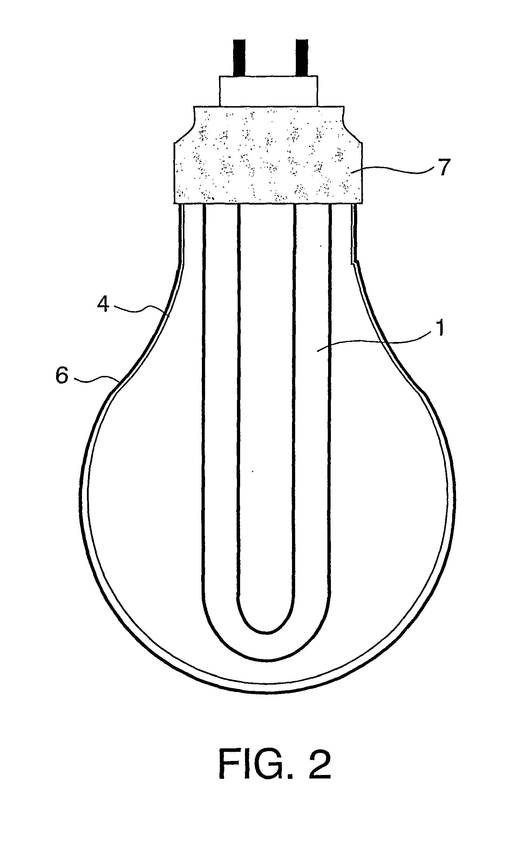

In a further embodiment in accordance with Fig. 2, the low-pressure gas discharge lamp comprises an inner bulb 1 that forms the gas discharge vessel for the low-pressure gas discharge. Said inner bulb 1 is tubular and folded so as to be U-shaped, and it is enveloped by a pear-shaped outer bulb 6. The inner bulb and the outer bulb are mounted on a common base 7.

The inner bulb may alternatively be embodied so as to be a multiple-bent or coiled tube.

As regards the shape of the outer bulb, any shape known from incandescent lamps can be selected, for example a spherical shape, a candle shape or a drop shape.

In accordance with a further embodiment of the invention, the inner bulbs and the outer bulbs are rod-shaped, ring-shaped or U-shaped coaxial tubes.

The inner bulb is preferably made of a glass type that is customarily used for the manufacture of incandescent lamps and luminescent tubes, for example a sodium lime silicate glass containing 69 to 73% SiO₂, 1 to 2% Al₂O₃, 3 to 4% MgO, 15 to 17% Na₂O, 4.2 to 4.6% CaO, 0.1 to 2% BaO and 0.4 to 1.6% K₂O. These glass types are transparent to the radiation in the UV range from 300 nm to 450 nm generated by the indium-containing gas filling.

The outer bulb may also be made from a customary lamp glass type.

To provide the phosphor coating on the gas discharge vessel or the outer bulb, use can be made of dry coating methods, such as electrostatic deposition or electrostatically supported sputtering, as well as a wet-coating method such as dip coating or spraying.

For wet-coating methods, the phosphors must be dispersed in water, an organic solvent, if necessary, in combination with a dispersing agent, a tenside and an anti-foaming agent, or a binder preparation. Suitable binder preparations for a phosphor in accordance with the invention comprise organic or inorganic binders that are capable of withstanding an operating temperature of 250 °C without decomposition, embrittlement or discoloration.

As the solvent for the phosphor preparation use is preferably made of water to which a thickening agent such as polymethacrylic acid or polypropylene oxide is added. Customarily, further additives such as dispersing agents, defoaming agents and powder conditioners such as aluminum oxide, aluminum oxynitride or boric acid are used. The phosphor preparation is provided on the inside of the outer bulb by pouring, flushing or spraying. The coating is subsequently dried by means of hot air. The layers generally have a layer thickness in the range from 1 to 50 µm.

In accordance with a further embodiment of the invention, the wall of the outer bulb is made of a material comprising a polymeric synthetic resin and one or more phosphors. Particularly suitable polymeric synthetic resins are polymethylmetacrylate (PMMA), polyethyleneterephtalate (THV), fluoroethylenepropylene (FEP) or polyvinyldifluoride (PVDF).

For an outer bulb of a polymeric synthetic resin containing one or more phosphors, the phosphor powder is preferably mixed with synthetic resin pellets and subsequently extruded and rolled so as to form a foil. Said foil can subsequently be formed into an outer bulb.

When the lamp is ignited, the electrons emitted by the electrodes excite the atoms and molecules in the gas filling so as to emit UV radiation from the characteristic radiation and a continuous spectrum in the range between 320 and 450 nm.

The discharge heats up the gas filling such that the desired vapor pressure and the desired operating temperature ranging from 170 to 285 °C at which the light output is optimal is achieved.

The radiation in the UV range from 300 nm to 450 nm generated by the indium-containing gas filling is incident on the phosphor layer, thereby causing said layer to emit visible radiation.

### Example 1

A cylindrical discharge vessel of glass, which is transparent to radiation in the UV range from 300 nm to 450 nm generated by the indium-containing gas filling, has a length of 15 cm and a diameter of 2.5 cm, and is provided with inner electrodes of tungsten. The discharge vessel is evacuated and simultaneously a dose of 0.3 mg indium bromide is added. Also argon is introduced at a cold pressure of 1.7 mbar.

For the phosphor layer, Y₃Al₅O₁₂:Ce was suspended in butylacetate with a dispersing agent, and subsequently applied by means of flow coating to the inside of the prepared lamp bulb of standard glass, dried to a 500 nm thick layer and burnt out at approximately 400 °C. An alternating current from an external alternating current source is supplied and the lumen efficiency is measured at an operating temperature of 225 °C. The lumen efficiency is 100 Lm/W.

### Example 2

To manufacture an outside coating for the gas discharge vessel, first a dispersion of 7.5% by weight SrGa₂S₄:Eu, 7.5% by weight (Y,Gd)₂O₃:BiEu, 0.75% by weight sodiumpolyacrylate as the dispersing agent and 0.075% by weight polyethylenepropylene oxide as the anti-foaming agent are subjected to a wet-grinding process with water in a mixing mill until the agglomerated phosphor has dispersed. The cleaned and baked lamp bulbs are immersed in this dispersion and subsequently burnt in at 480 °C. The amount of phosphor applied is 5.0 g.

### Example 3

To manufacture a coating for an outer bulb, 16 g Ba₂SiO₄:Eu, 8 g (Y,Gd)₂O₃:Bi,Eu and 25 g polyethyleneterephtalate are dissolved in 100 g of an acetone/toluol mixture. A quantity of 10 g of this solution is sprayed onto the inside of a lamp bulb. Subsequently, the coating is dried in an air flow. The coated outer bulb and the inner bulb, the ballast and the starter are jointly mounted in a customary manner on a common base.

### Example 4

To manufacture an outer bulb from a polymeric synthetic resin with a phosphor, a mixture consisting of 90 parts polymethylmethacrylate pellets and 5 parts SrS:Eu and 5 parts ZnS:Cu,Al,Au are mixed and extruded to a film at a temperature of approximately 295 °C, after which said film is formed into a pear-shaped bulb. The outer bulb, the inner bulb, the ballast and the starter are jointly mounted on a common base in a customary manner.

## Claims

1. A low-pressure gas discharge lamp comprising a gas discharge vessel containing a gas filling with an indium compound and a buffer gas, and comprising a phosphor layer containing at least one phosphor emitting in the visible range of the spectrum, and comprising electrodes and means for generating and maintaining a low-pressure gas discharge.

2. A low-pressure gas discharge lamp as claimed in claim 1, **characterized in that** the emission from the phosphor layer together with the emission from the gas discharge forms white light.

3. A low-pressure gas discharge lamp as claimed in claim 1, **characterized in that** the phosphor layer contains an orange-yellow phosphor that emits in the range from 560 nm to 590 nm.

4. A low-pressure gas discharge lamp as claimed in claim 1, **characterized in that** a phosphor layer that contains an orange-yellow phosphor selected from the group formed by Y₃Al₅O₁₂:Ce and (Y₁₋ₓGdₓ)₃(Al_{1-y}Ga_{y})₅O₁₂:Ce, where 0<x<1 and 0<y<1.

5. A low-pressure gas discharge lamp as claimed in claim 1, **characterized in that** the phosphor layer contains a red phosphor with an emission band in the spectral range from 510 to 560 nm and a green phosphor with an emission band in the spectral range from 590 to 630 nm.

6. A low-pressure gas discharge lamp as claimed in claim 1, **characterized in that** the phosphor layer contains a red phosphor selected from the group formed by Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu and Y₂O₂S:Eu; and a green phosphor selected from the group formed by (Ba,Sr)Mg,Al₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb and LaOBr:Ce,Tb.

7. A low-pressure gas discharge lamp as claimed in claim 1, **characterized in that** the phosphor layer contains a red phosphor with an emission band in the spectral region from 510 to 560 nm, a green phosphor with an emission band in the spectral region from 590 to 630 nm and a blue phosphor with an emission band in the spectral region from 420 to 460 nm.

8. A low-pressure gas discharge lamp as claimed in claim 1, **characterized in that** the phosphor layer contains a red phosphor selected from the group formed by Sr₂CeO₄:Eu, Y₂O₃:Eu,Bi; (Y,Gd)₂O₃ :Eu,Bi; Y(V,P)O₄:Eu; Y(V,P)O₄:Eu,Bi; SrS:Eu and Y₂O₂S:Eu; and a green phosphor selected from the group formed by (Ba,Sr)Mg,Al₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb; LaOBr:Ce,Tb and GdF₂Ce,Tb, and a blue phosphor selected from the group formed by (Ba,Sr)Mg,Al₁₀O₁₇:Eu; (Ba,Sr)₅(PO₄)₃(F,Cl):Eu; Y₂SiO₅:Ce; ZnS:Ag and La_{0.7}Gd_{0.3}OBr:Ce.

9. A low-pressure gas discharge lamp as claimed in claim 1, **characterized in that** the gas discharge vessel is surrounded by an outer bulb, and the outer surface of the gas discharge vessel is coated with the phosphor coating.

10. A low-pressure gas discharge lamp as claimed in claim 1, **characterized in that** the gas discharge vessel is surrounded by an outer bulb, and the outer bulb is coated with the phosphor layer.

## Patentansprüche

1. Niederdruckgasentladungslampe, die ein Gasentladungsgefäß, das eine Gasfüllung mit einer Indiumverbindung und einem Puffergas enthält, und eine Leuchtstoffschicht, die mindestens einen im sichtbaren Bereich des Spektrums emittierenden Leuchtstoff enthält, sowie Elektroden und Mittel zur Erzeugung und Aufrechterhaltung einer Niederdruckgasentladung umfasst.

2. Niederdruckgasentladungslampe nach Anspruch 1, **dadurch gekennzeichnet, dass** die Emission der Leuchtstoffschicht zusammen mit der Emission der Gasentladung weißes Licht bildet.

3. Niederdruckgasentladungslampe nach Anspruch 1, **dadurch gekennzeichnet, dass** die Leuchtstoffschicht einen orange-gelben Leuchtstoff mit einer Emission im Bereich von 560 nm bis 590 nm enthält.

4. Niederdruckgasentladungslampe nach Anspruch 1, **dadurch gekennzeichnet, dass** die Leuchtstoffschicht einen orange-gelben Leuchtstoff enthält, der aus der Gruppe Y₃Al₅O₁₂:Ce und (Y₁₋ₓGdₓ)₃(Al_{1-y}Ga_{y})₅O₁₂:Ce, mit 0 < x < 1 und 0 < y < 1, ausgewählt ist.

5. Niederdruckgasentladungslampe nach Anspruch 1, **dadurch gekennzeichnet, dass** die Leuchtstoffschicht einen roten Leuchtstoff mit einer Emissionsbande im Spektralbereich von 510 bis 560 nm und einen grünen Leuchtstoff mit einer Emissionsbande im Spektralbereich von 590 bis 630 nm enthält.

6. Niederdruckgasentladungslampe nach Anspruch 1, **dadurch gekennzeichnet, dass** die Leuchtstoffschicht einen roten Leuchtstoff enthält, der aus der Gruppe Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu und Y₂O₂S:Eu ausgewählt ist; und einen grünen Leuchtstoff, der aus der Gruppe (Ba,Sr)MgAl₁₀O₁₇:Eu,Mn; ZnS:Cu,Al,Au; SrGa₂S₄Eu; (Sr,Ba, Ca)(Ga,Al)₂S₄:Eu; (Y,Gd)BO₃:Ce,Tb; (Y,Gd)₂O₂S:Tb und LaOBr:Ce,Tb ausgewählt ist.

7. Niederdruckgasentladungslampe nach Anspruch 1, **dadurch gekennzeichnet, dass** die Leuchtstoffschicht einen roten Leuchtstoff mit einer Emissionsbande im Spektralbereich von 510 bis 560 nm, einen grünen Leuchtstoff mit einer Emissionsbande im Spektralbereich von 590 bis 630 nm und einen blauen Leuchtstoff mit einer Emissionsbande im Spektralbereich von 420 bis 460 nm enthält.

8. Niederdruckgasentladungslampe nach Anspruch 1, **dadurch gekennzeichnet, dass** die Leuchtstoffschicht einen roten Leuchtstoff enthält, der aus der Gruppe Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu und Y₂O₂S:Eu ausgewählt ist; und einen grünen Leuchtstoff, der aus der Gruppe (Ba,Sr)MgAl₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb; LaOBr:Ce,Tb und GdF₂Ce,Tb ausgewählt ist; und einen blauen Leuchtstoff, der aus der Gruppe (Ba,Sr)MgAl₁₀O₁₇:Eu; (Ba,Sr)₅(PO₄)₃(F,Cl):Eu; Y₂SiO₅:Ce; ZnS:Ag und La_{0,7}Gd_{0,3}OBr:Ce ausgewählt ist.

9. Niederdruckgasentladungslampe nach Anspruch 1, **dadurch gekennzeichnet, dass** das Gasentladungsgefäß von einem Außenkolben umgeben ist und das die Außenfläche des Gasentladungsgefäßes mit dem Leuchtstoffüberzug beschichtet ist.

10. Niederdruckgasentladungslampe nach Anspruch 1, **dadurch gekennzeichnet, dass** das Gasentladungsgefäß von einem Außenkolben umgeben ist und der Außenkolben mit der Leuchtstoffschicht beschichtet ist.

## Revendications

1. Lampe à décharge de gaz à basse pression comprenant un récipient à décharge de gaz qui contient un remplissage de gaz avec un composé d'indium et un gaz protecteur et comprenant une couche de phosphore qui contient au moins un phosphore émettant du rayonnement dans la gamme visible du spectre et comprenant des électrodes et des moyens pour générer et pour maintenir une décharge gazeuse à basse pression.

2. Lampe à décharge de gaz à basse pression selon la revendication 1, **caractérisée en ce que** l'émission en provenance de la couche de phosphores en combinaison avec l'émission en provenance de la décharge gazeuse constitue de la lumière blanche.

3. Lampe à décharge de gaz à basse pression selon la revendication 1, **caractérisée en ce que** la couche de phosphore contient un phosphore jaune orange qui émet du rayonnement dans la gamme comprise entre 560 nm et 590 nm.

4. Lampe à décharge de gaz à basse pression selon la revendication 1, **caractérisée en ce qu'**une couche de phosphore contient un phosphore jaune orange qui est sélectionné parmi le groupe étant formé par Y₃Al₅O₁₂:Ce et (Y₁₋ₓGdₓ)₃(Al_{1-y}Ga_{y})₅O₁₂:Ce où 0<x<1 et 0<y<1.

5. Lampe à décharge de gaz à basse pression selon la revendication 1, **caractérisée en ce que** la couche de phosphore contient un phosphore rouge avec une bande d'émission dans la gamme spectrale comprise entre 510 nm et 560 nm et un phosphore vert avec une bande d'émission dans la gamme spectrale comprise entre 590 nm et 630 nm.

6. Lampe à décharge de gaz à basse pression selon la revendication 1, **caractérisée en ce que** la couche de phosphore contient un phosphore rouge qui est sélectionné parmi le groupe étant formé par Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu et Y₂O₂S:Eu et un phosphore vert qui est sélectionné parmi le groupe étant formé par (Ba,Sr)MgAl₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb et LaOBr:Ce,Tb.

7. Lampe à décharge de gaz à basse pression selon la revendication 1, **caractérisée en ce que** la couche de phosphore contient un phosphore rouge avec une bande d'émission dans la gamme spectrale comprise entre 510 nm et 560 nm, un phosphore vert avec une bande d'émission dans la gamme spectrale comprise entre 590 nm et 630 nm et un phosphore bleu avec une bande d'émission dans la gamme spectrale comprise entre 420 nm et 460 nm.

8. Lampe à décharge de gaz à basse pression selon la revendication 1, **caractérisée en ce que** la couche de phosphore contient un phosphore rouge qui est sélectionné parmi le groupe étant formé par Sr₂CeO₄:Eu, Y₂O₃:Eu,Bi; (Y,Gd)₂O₃:Eu,Bi; Y(V,P)O₄:Eu; Y(V,P)O₄:Eu,Bi; SrS:Eu et Y₂O₂S:Eu et un phosphore vert qui est sélectionné parmi le groupe étant formé par (Ba,Sr)Mg,Al₁₀O₁₇:Eu,Mn; ZnS:Cu,Al,Au; SrGa₂S₄Eu; (Sr,Ba,Ca)(Ga,Al)₂S₄:Eu; (Y,Gd)BO₃:Ce,Tb; (Y,Gd)₂O₂S:Tb; et LaOBr:Ce,Tb et GdF₂Ce,Tb et un phosphore bleu qui est sélectionné parmi le groupe étant formé par (Ba,Sr)Mg,Al₁₀O₁₇:Eu; (Ba,Sr)₅(PO₄)₃(F,Cl):Eu; Y₂SiO₅:Ce; ZnS:Ag et La_{0.7}Gd_{0.3}OBr:Ce.

9. Lampe à décharge de gaz à basse pression selon la revendication 1, **caractérisée en ce que** le récipient à décharge de gaz est entouré d'une ampoule extérieure et **en ce que** la surface extérieure du récipient à décharge de gaz est revêtue d'une couche de revêtement de phosphore.

10. Lampe à décharge de gaz à basse pression selon la revendication 1, **caractérisée en ce que** le récipient à décharge de gaz est entouré d'une ampoule extérieure et **en ce que** l'ampoule extérieure est revêtue de la couche de phosphore.
